# EUROPÄISCHE PATENTSCHRIFT

(11) **EP 0 771 049 B1**
(45) Veröffentlichungstag und Bekanntmachung des Hinweises auf die Patenterteilung: **24.05.2000**
(21) Anmeldenummer: 96116550.3
(22) Anmeldetag: 16.10.1996
(51) Int. Cl.: H01R 9/24, H02G 5/08, G02B 6/42

(54) **Elektrische Anschlussvorrichtung für die Gebäudesystemtechnik**
Electrical connection device for the domestic communication system
Dispositif de raccordement électrique pour le réseau domestique

(30) Priorität: 28.10.1995 DE 19540330
(43) Veröffentlichungstag der Anmeldung: 02.05.1997
(73) Patentinhaber: Gebrüder Merten GmbH & Co. KG, D-51674 Wiehl (DE)
(72) Erfinder: Erbse, Karl-Ulrich, Dipl.-Phys., 51647 Gummersbach (DE); Stefanski, Manfred, Dipl.-Ing., 51647 Gummersbach (DE)
(74) Vertreter: Selting, Günther, Dipl.-Ing.

(56) Entgegenhaltungen:
- DE-A- 4 010 777
- DE-U- 9 204 022

## Beschreibung

Die Erfindung bezieht sich auf eine elektrische Anschlußvorrichtung, wie Anschlußdose, mit einem durch einen Deckel abgedeckten Träger für eine in den Träger einsetzbare Klemmeinrichtung, an der einerseits die Netzleitung und andererseits eine bewegliche Anschlußleitung eines elektrischen Gerätes anschließbar sind, wobei der Träger ggf. über Zugentlastungsmittel für die bewegliche Anschlußleitung verfügt.

In der DE-A-32 26 265 ist eine flexible elektrische Leitung beschrieben, die außer den elektrischen Leitern für den Netzanschluß eines Gerätes noch einen Lichtleiter enthält, über den optische Signale übertragen werden können.

In der DE-C-32 27 770 ist eine elektrische Steckvorrichtung mit einer Steckdose und einem Stecker beschrieben, die den Anschluß einer flexiblen Netzleitung an eine fest installierte Netzleitung ermöglicht und außerdem einen gebäudeseitig installierten Lichtwellenleiter mit einem Lichtwellenleiter der anzuschließenden flexiblen Leitung optisch verbindet. Hierzu ist wenigstens ein Kontaktteil der elektrischen Steckvorrichtung zugleich als Lichtwellenleiter-Steckvorrichtung ausgebildet. Die Steckvorrichtung verbindet den elektrischen und den optischen Teil einer Leitung mit den gebäudeseitigen elektrischen Versorgungsleitungen und den optischen Datenleitungen.

Zum Fernschalten, Fernsteuern, Regeln und Überwachen von Geräten werden elektrische Bussysteme verwendet, die an den Enden der Busleitungen Busankoppler besitzen, an die, ggf. über Schnittstellen, die Steuerein- oder -ausgänge der Geräte anschließbar sind. Die Busankoppler können komplexe elektronische Schaltungsanordnungen mit einem Mikroprozessor enthalten und sind in der Lage, Datentelegramme zu erzeugen und zu senden sowie zu empfangen und auszuwerten, ferner ankommende Steuerbefehle zu verarbeiten. Ein derartiges Bussystem für die Gebäudesystemtechnik ist in der EP 0 344 609 B1 beschrieben.

Die oben beschriebenen Anschlußvorrichtungen sind sämtlich Steckvorrichtungen, bei denen der Anschluß durch den Benutzer mit einem Stecker erfolgt. Die Erfindung bezieht sich dagegen auf eine Anschlußvorrichtung mit fester Verbindung der Anschlußleitung mit den Netzleitungen.

Eine derartige Anschlußvorrichtung soll den Zweck erfüllen, ein externes Gerät, beispielsweise einen Elektroherd oder eine Nachtstromspeicherheizung an das Stromnetz (Hausnetz) und an einen elektrischen Steuerbus anzuschließen, wobei zur Vermeidung von Störeinstreuungen von der Netzspannung die Signalübertragung von der Anschlußvorrichtung bis zum externen Gerät auf optischem Wege erfolgt.

Während eine elektrische Signalleitung, die zusammen mit einer Versorgungsleitung in einem gemeinsamen Leitungsstrang eingebettet ist, von der Versorgungsleitung gestört wird, werden optische Signale durch Ströme oder Spannungen nicht beeinflußt.

Die Aufgabe der Erfindung besteht darin, eine Anschlußvorrichtung mit fester Verbindung für den Anschluß eines elektrischen Gerätes an das Stromnetz und den Anschluß an ein elektrisches Busleitsystem zu schaffen, die die Übertragung von Lichtsignalen ermöglicht, so daß eine Beeinflussung der Datenleitungen von den Netzleitungen nicht stattfindet.

Die Aufgabe wird erfindungsgemäß mit einer Anschlußvorrichtung gemäß Patentanspruch 1 gelöst.

Die erfindungsgemäße Anschlußvorrichtung ist generell auf der Grundlage üblicher Anschlußvorrichtungen für die Stromversorgung ausgebildet. Derartige Anschlußvorrichtungen weisen einen Träger auf, der als Tragrahmen oder Tragplatte ausgebildet sein kann, und ggf. ein an der Rückseite des Tragrahmens oder der Tragplatte befestigtes Traggestell. In der Öffnung des Tragrahmens bzw. der Tragplatte ist der Klemmstein an deren Innenseiten eingesetzt und geführt und am Traggestell abgestützt, wobei die am Rahmen oder der Platte angeordnete Zugentlastungsvorrichtung einer Längsseite des Klemmsteins gegenüberliegt. Bei dieser Anordnung ist dafür Sorge getragen, daß zwischen der Zugentlastungsvorrichtung und dem Klemmstein bzw. dem Tragrahmen ausreichender Anschlußraum vorhanden ist, um die verhältnismäßig biegesteifen Kupferadern sowohl geräteseitig als auch gebäudeseitig bequem anschließen zu können.

Nach der Erfindung weist die Anschlußvorrichtung außer der Klemmeinrichtung noch wenigstens einen lichtelektrischen Wandler mit einem Sender und/oder Empfänger auf, deren Sende- und/oder Empfangselemente über Lichtfenster mit dem Lichtleiter der Anschlußleitung optisch gekoppelt sind. Der wenigstens eine lichtelektrische Wandler ist mit seinem elektrischen Eingang und/oder Ausgang mit einem elektrischen Busankoppler verbunden oder verbindbar, der an einer gebäudeseitig installierten elektrischen Busleitung angeschlossen oder anschließbar ist. Dieser Busankoppler ist eine elektronische Vorrichtung, die mit anderen Busankopplern einen elektronischen Telegrammverkehr durchführen kann, z.B. ein "Bus Interface Module" (BIM). Der Busankoppler kann dementsprechend als intelligente (mit µ-Controller) oder passive (ohne µ-Controller) Version ausgebildet sein. Der Busankoppler ist mit dem lichtelektrischen Wandler verbunden, der in der Anschlußvorrichtung enthalten ist und durch ein Fenster hindurch mit einem Lichtleiter der Anschlußleitung kommunizieren kann, der in dem externen Gerät endet. Auf diese Weise dient die Anschlußvorrichtung nicht nur zum Herstellen elektrischer oder optischer Kopplungen, sondern sie dient zugleich zur Umwandlung elektrischer Signale in Lichtsignale bzw. zur Umwandlung von Lichtsignalen in elektrische Signale. Während die Datenverarbeitung in dem gebäudeseitigen elektrischen Hausleitsystem durchgeführt wird, hat die Anschlußvorrichtung die Aufgabe, Signale, die von dem angeschlossenen Gerät über Lichtleiter übertragen werden, in elektrische Signale umzuwandeln und/oder elektrische Signale, die von dem Busankoppler erzeugt werden, in Lichtsignale für das angeschlossene Gerät umzuwandeln. Auf diese Weise können die üblichen elektrischen Hausleitsysteme verwendet werden, die vom Versorgungsnetz entkoppelt sind und somit durch das Versorgungsnetz nicht gestört werden, während der Anschluß des elektrischen Gerätes über ein flexibles Kabel erfolgt, in dem die elektrischen Versorgungsleitungen mit Lichtleitern kombiniert sind. Die Signale in Lichtwellenleitern werden durch Spannungen oder Ströme der Versorgungsleitungen nicht beeinflußt, so daß kein Übersprechen stattfindet.

Nach einer vorteilhaften Weiterbildung der Erfindung ist der Busankoppler an dem Träger, d.h. am Tragrahmen bzw. der Tragplatte oder an dem Traggestell angeordnet. Es ist also der Übergang zwischen Elektronik und Lichtsignaltechnik in der Anschlußvorrichtung selbst vorgesehen, so daß keine zusätzlichen Apparate benötigt werden und der Anschluß eines elektrischen Gerätes in der üblichen Weise durch einfaches Anschließen eines Anschlußkabels an die Anschlußvorrichtung erfolgen kann. Die über den Datenbus übertragenen analogen oder digitalen elektrischen Signale werden in der Anschlußvorrichtung in optische Signale umgewandelt. Diese optischen Signale werden in dem elektrischen Anschlußkabel übertragen und im Gerät wieder in elektrische Signale umgewandelt. In der Regel ist der Signalfluß zwischen dem Gerät und dem Datenbus bidirektional. Dieser bidirektionale Datenfluß kann über zwei Lichtwellenleiter (einen für jede der beiden Richtungen) geführt werden oder auch im Einleiterbetrieb, wenn für die Hinleitung ein anderes Zeitfenster zur Verfügung steht als für die Rückleitung.

Dadurch, daß in der Anschlußvorrichtung sowohl das Stromnetz (Hausnetz, z.B. 400 V∼) als auch eine niedrige Signalspannung (Busspannung 24 Volt=) zusammengeführt sind, muß dafür gesorgt werden, daß in der Anschlußvorrichtung selbst die Gefahr eines unzulässigen Potentialzustandes vermieden wird. Entsprechend sind für den Anschluß der gebäudeseitigen Versorgungsleitungen mit der geräteseitigen Anschlußleitung sowie für den elektrischen Busankoppler getrennte Installationsräume vorgesehen, wobei der Anschluß der Versorgungsleitungen in einer von der Rahmenöffnung des Trägers der Anschlußvorrichtung zugänglichen Anschlußebene erfolgt und der Busankoppler in einem rückwärtigen Gehäuse des Trägers angeordnet ist, welches eine Anschlußvorrichtung für die Busleitung aufweist. Dadurch ist zunächst für eine Einhaltung der vorgeschriebenen Luft- und Kriechstrecken zwischen den Anschlußleitungen und dem Busankoppler gesorgt.

Vorteilhaft sind die zur Kopplung mit dem Lichtleiter der Anschlußleitung einerseits und dem lichtelektrischen Wandler andererseits vorgesehenen Lichtfenster in der von der Anschlußöffnung der Anschlußvorrichtung zugänglichen Vorderseite, z.B. im Bereich der Rahmenöffnung des Tragrahmens, vorgesehen. Die Lichtfenster sind auf die der Zugentlastung zugewandten Seite des Tragrahmens gerichtet, um den in der Anschlußleitung vorhandenen, wenigsten einen Lichtleiter, ohne zu knicken, mit dem Lichtfenster koppeln zu können. Vorteilhaft sind die Lichtfenster annähernd in der Ebene der Zugentlastungsvorrichtung angeordnet.

Vorteilhaft ist der Busankoppler an der dem Klemmstein zugewandten Rückseite des Trägers angeordnet und durch den Tragrahmen bzw. das Traggestell hindurch, bzw. an dessen tragenden Teilen entlang, sind Kanäle oder Aufnahmen für optische oder elektrische Leitungen vorhanden, die sich von den Lichtfenstern bis zum Busankoppler erstrecken. Diese Kanäle oder Aufnahmen dienen zum Schutz der optischen oder elektrischen Signalleitungen vor Beschädigung, so daß zumindest im Bereich des Installationsraumes der elektrischen Stromleitungen eine geschützte Durchführung zum Busankoppler erfolgt.

Für die Anordnung und Anbringung des mindestens einen lichtelektrischen Wandlers ergeben sich mehrere Möglichkeiten. Eine erste Variante sieht vor, daß der mindestens eine lichtelektrische Wandler in einer Aufnahme des Lichtfensters angebracht ist und durch in den Kanälen oder Aufnahmen verlaufende elektrische Leitungen mit dem Busankoppler verbunden ist.

Bei einer anderen Variante sind je ein Lichtein- und Lichtaustrittsfenster in je einer an der dem Klemmstein zugewandten Vorderseite des Tragrahmens angebracht und je ein Lichtleiter ist mit einem Ende mit dem Lichteintritts- bzw. Lichtaustrittsfenster und mit dem anderen Ende mit je einem lichtelektrischen Wandler im Busankoppler gekoppelt.

Bei einer weiteren Variante ist der mit dem lichtelektrischen Wandler im Busankoppler gekoppelte Lichtleiter bis in den Bereich an die vordere Ebene des Trägers hochgezogen und darüber hinaus noch durch ein flexibles Stück verlängert, das an seinem freien Ende eine Lichtleiteranschlußklemme, wie Hülsenklemme, aufweist. Das flexible Stück Lichtleiter ist so lang bemessen, daß es mit einer ausreichenden Krümmung aus einer aus der Ebene des Tragrahmens austretenden Lage in eine quer zur Ebene des Tragrahmens verlaufenden Lage biegbar und somit auf einfache Weise mit dem aus der Anschlußleitung austretenden Lichtleiter koppelbar ist. Falls notwendig, kann der Lichtleiter der Anschlußleitung noch um ein Stück länger sein als die elektrischen Anschlußadern, so daß die Verbindung der Lichtleiterenden mit der Lichtleiterverbindungsklemme unter optimalen Bedingungen erfolgen kann. Das bedeutet letzten Endes für den Monteur, daß im Gegensatz zum elektrischen Anschluß, bei dem die Leitungen mitunter gestaucht und geknickt werden müssen, der sehr empfindliche Lichtleiteranschluß ohne Behinderung erfolgen kann, wobei die Überlänge des Lichtleiters unter der Abdeckhaube verstaut werden kann. Als Lichtleiterverbindungsklemme kann eine geschlitzte Einsteckhülse mit Gewinde und jeweils kegeligen Enden verwendet werden, die mit einer Überwurfmutter zusammendrückbar sind, so daß ein eingesteckter Lichtleiter am Außenmantel schonend festgeklemmt wird. Bei den lichtelektrischen Wandlern handelt es sich um einen Lichtsender und einen Lichtempfänger.

Bei den vorstehend beschriebenen Varianten handelt es sich um werkseitig bereits vormontierte Anordnungen, so daß nur der Anschluß des wenigstens einen Lichtleiters der Anschlußleitung an das entsprechende Lichtfenster zu erfolgen hat. Im Bereich der Lichtfenster sind für den Anschluß der Lichtleiter Klemmvorrichtungen vorgesehen. Erfindungsgemäß ist je ein Lichtfenster an den, den Stirnseiten des Klemmsteins benachbarten Seiten des Tragrahmens vorgesehen. Im einfachsten Fall ist das Lichtfenster der Lichtein- oder Lichtaustrittsquerschnitt des Lichtleiters.

Im Rahmen der Erfindung ist ein lichtelektrischer Wandler ein Wandler, der entweder elektrische Signale in Lichtsignale oder Lichtsignale in elektrische Signale umwandelt.

Bei dem Datenbus handelt es sich vorzugsweise um einen elektrischen Datenbus gemäß der "European Installation Bus Association" (EIBA).

Die Erfindung bewirkt eine sichere Lichtübertragung von der Anschlußvorrichtung zum externen Gerät und in Gegenrichtung, wobei die Lichtverluste durch seitlichen Versatz, Winkelversatz und Separation am Luftspalt so gering gehalten werden, daß dadurch die Funktion der Datenübertragung nicht beeinträchtigt wird.

Nachfolgend werden anhand der Zeichnungen Ausführungsbeispiele der Erfindung näher erläutert. Es zeigen:
- Figur 1: einen Teilschnitt durch eine elektrische Anschlußvorrichtung,
- Figur 2: die Seitenansicht der Anschlußvorrichtung nach Figur 1,
- Figur 3: die Vorderansicht auf eine weitere Ausführung der Anschlußvorrichtung,
- Figur 4: einen Schnitt durch die Anschlußvorichtung entlang der Linie A-B in Figur 3 und
- Figur 5: eine Vorderansicht der Anschlußvorrichtung ohne Klemmstein.

Die Anschlußvorrichtung, auch als Anschlußdose bezeichnet, dient zum festen Anschließen eines elektrischen Gerätes, beispielsweise Elektroherd oder Nachtstromspeicherheizung, an das Stromversorgungsnetz und zum Anschließen an einen elektrischen Steuerbus zum Fernschalten, Fernsteuern, Regeln oder Überwachen des elektrischen Gerätes, wobei die Übertragung der Signale bzw. Daten von der Anschlußvorrichtung bis zum Gerät auf optischem Wege erfolgt. Eine entsprechende flexible Anschlußleitung 6 enthält dann außer den elektrischen Adern L1, L2, L3, N und 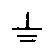 noch zwei optische Adern LW1 und LW2.

Die der Erfindung zugrunde liegenden Ausführungsbeispiele betreffen sogenannte Unterputz-Ausführungen zum Einbau in Unterputzdosen. Selbstverständlich kann die Erfindung auch für Aufputz-Geräte angewendet werden.

Die in den Figuren der Zeichnungen dargestellten Anschlußvorrichtungen bestehen aus einem quadratischen Tragrahmen 7 mit einer den Querschnitt der Unterputzdose 8 im wesentlichen freilassenden Rahmenöffnung 9. An gegenüberliegenden Längsseiten des Tragrahmens 7 sind rechtwinklig vom Tragrahmen abstehende Stege 10 angeordnet, vorzugsweise angeformt, die an den freien Enden durch eine Traverse 11 miteinander verbunden sind. Tragrahmen 7, Stege 10 und die Traverse 11 bilden einen Träger zur Aufnahme von paarweise vorhandenen Spreizkrallen 12 sowie zum Einsetzen und zum Abstützen eines fünfpoligen Klemmsteines 13, der in die Rahmenöffnung 9 in Führungen 14 einsetzbar und an Auflagern 15 der Traverse 11 abgestützt ist. Mit den Spreizkrallen 12 und den Stellschrauben 16 wird die Anschlußvorrichtung in der Unterputzdose 8 festgeklemmt, wobei in der Einbaulage der Tragrahmen 7 mit seiner Rückseite plan an der Montagefläche, beispielsweise an einer Wand, aufliegt. Der Tragrahmen 7 ist mit einem daran befestigbaren Deckel 17 abgedeckt. An Stelle der Spreizkrallen 12 können auch nicht dargestellte Befestigungslöcher für eine Schraubenbefestigung verwendet werden.

Parallel zum Klemmstein 13 befindet sich an einer Längsseite des Tragrahmens 7 eine Zugentlastungsvorrichtung 18 mit der die bewegliche Anschlußleitung 6 an dem Tragrahmen 7 befestigt wird.

An dem Träger 7, 10, 11 ist außer dem Klemmstein 13 noch ein elektronischer Busankoppler 19 angebracht, der mit einer elektrischen Busleitung 20 über eine Steckvorrichtung 21, 22 verbindbar ist.

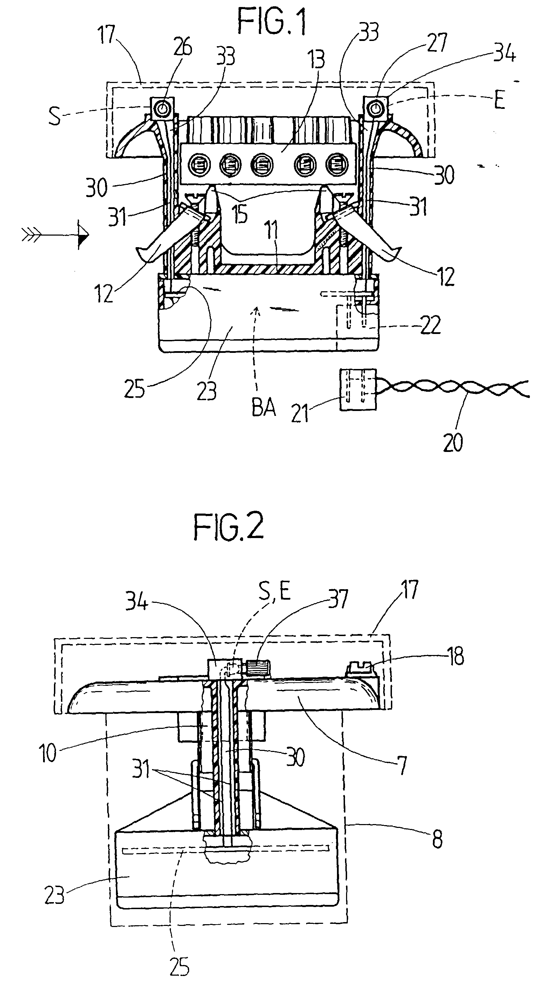

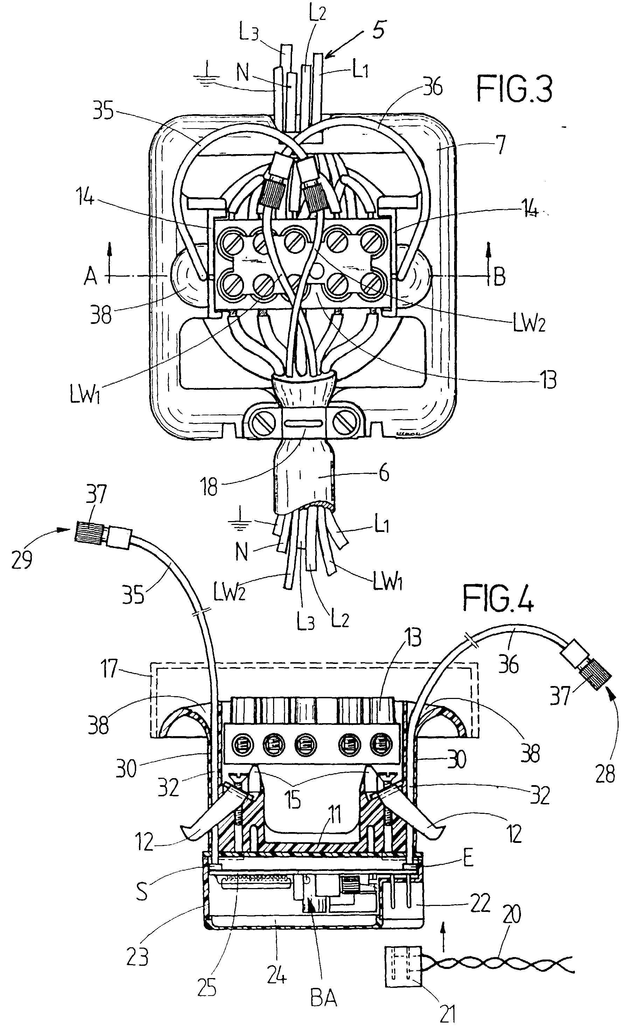

Wie die Figuren 1 und 4 zeigen, ist auf der Rückseite des Trägers 7, 10, 11, hier an der Traverse 11, ein Gehäuse 23 angeordnet, das als separates Teil ausgebildet und nachträglich mit dem Träger 7, 10, 11 verbunden ist. Selbstverständlich kann das Gehäuse 23 auch als einstückiger Bestandteil des Trägers 7, 10, 11 ausgebildet sein. Dieses Gehäuse 23 ist an der rückwärtigen Stirnseite mit einem Deckel 24 verschlossen. Das Gehäuse 23 enthält den Busankoppler BA in Form einer elektrischen Schaltung, dessen Komponenten auf einer Leiterbahnplatine 25 angeordnet sind. An dem Gehäuse 23 befindet sich eine nicht näher bezeichnete Ausnehmung, in die die Steckerstifte der Steckvorrichtung 22 hineinragen. Auf die Steckerstifte wird der Stecker 21 aufgesteckt, der mit der Busleitung 20 verbunden ist. Auf diese Weise wird die Busleitung 20 an den Busankoppler BA angeschlossen.

Wie aus den Figuren 1 und 4 hervorgeht, sind der Klemmstein 13 und der Busankoppler BA räumlich voneinander getrennt angeordnet und verhältnismäßig weit voneinander entfernt. Für den Klemmstein 13 ist ein frontseitiger, durch den Deckel 17 einerseits und den oberen Teil der Unterputzdose 8 andererseits gebildeter, Installationsraum zum Anschließen der beweglichen und der gebäudeseitigen Anschlußleitungen 5 vorhanden, die aus den Adern L1, L2, L3, N, 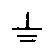 besteht. Für den Busankoppler BA ist der durch das geschlossene rückwärtige Gehäuse 23 gebildete Installationsraum vorgesehen, so daß die Übertragung einer gefährlichen Berührungsspannung von den Stromleitungen auf die Busleitung 20 verhindert ist. Durch diese Ausbildung der Anschlußvorrichtung bedingt erfolgt der Anschluß und Einbau in mehreren Schritten. Zunächst ist die Busleitung 20 durch Einstecken des Steckers 21 in die Steckvorrichtung 22 des Busankopplers BA anzuschließen. Dann erfolgt der Einbau der Anschlußvorrichtung in die Unterputzdose 8 mit Hilfe der Spreizkrallen 12. Danach kann der Anschluß der gebäudeseitigen Stromleitungen 5 an den Klemmstein 13 erfolgen. Hiermit ist zunächst der erste Teil der Anschlußtätigkeit beendet. Der zweite Teil erfolgt durch den späteren Anschluß des Gerätes über die bewegliche Leitung 6, wie nachfolgend beschrieben wird.

Wie bereits beschrieben, erfolgt die Übertragung der Bussignale oder Bustelegramme von der Anschlußvorrichtung über die Leitung 6 zum externen Gerät auf optischem Wege. Entsprechend sind in die Anschlußleitung 6 außer den elektrischen Adern L1, L2, L3, N, 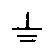 noch zwei Lichtleiter LW1, LW1 eingebettet. Der Busankoppler BA ist mit einem als Lichtsender S und einem als Lichtempfänger E ausgebildeten lichtelektrischen Wandler verbunden, mit denen die elektrischen Bussignale oder Telegramme in optische und die von externen Geräten kommenden optischen Signale oder Telegramme in elektrische umgewandelt werden. Lichtsender S und Lichtempfänger E sind über Lichtfenster 26, 27 bzw. 28, 29 mit den Lichtleitern LW1 und LW2 der Anschlußleitung 6 koppelbar. Im einfachsten Fall sind die Lichtfenster 26, 27, 28, 29 durch die wirksamen Lichtquerschnitte der Lichtleiter bzw. von Lichtsender S und Lichtempfänger E gebildet. Selbstverständlich können in die Lichtfenster Koppelelemente wie Deckscheiben oder Linsen sowie Zentriermittel für die Lichtleiter eingebaut sein.

Von dem Boden des Gehäuses 23 des Busankopplers BA bis zur Vorderseite des Tragrahmens 7 verlaufen zwei Aufnahmen oder Kanäle 30 für optische oder elektrische Leitungen 31, 32. Diese Aufnahmen oder Kanäle 30 erstrecken sich entlang der beiden Stege 10 oder durch sie hindurch und treten einerseits im Gehäuse 23 und andererseits an der Vorderseite des Tragrahmens 7 aus, so daß eine geschützte Verbindung für die Leitungen 31, 32 geschaffen ist.

Gemäß den Figuren 1 und 2 ist an der Vorderseite des Tragrahmens 7, und zwar im Bereich jedes Kanalaustrittes 33, je eine Aufnahme 34 angeordnet, die den Lichtsender S und den Lichtempfänger E aufnehmen und deren elektrische Leitungen 31 durch die Kanäle 30 hindurch an den Busankoppler BA, in diesem Fall an die Leiterbahnplatine 25, angeschlossen sind. Die Lichtfenster 26,27 der Aufnahmen 34 sind auf die der Zugentlastungsvorrichtung 18 zugewandten Längsseite des Tragrahmens 7 gerichtet und liegen etwa in der Ebene der Zugentlastungsvorrichtung 18, so daß ein Stauchen oder Knicken der Lichtleiter LW1 und LW2 beim Anschließen vermieden werden kann.

Eine andere Möglichkeit für die optische Kopplung besteht darin, daß Lichtsender S und Lichtempfänger E im Gehäuse 23 des Busankopplers BA, vorzugsweise auf der Leiterbahnplatine 25, angeordnet sind und die Aufnahme 34 lediglich die Lichtfenster 26, 27 enthalten. Die Verbindung vom Lichtsender S zum Lichtfenster 26 bzw. vom Lichtempfänger E zum Lichtfenster 27 erfolgt in diesem Fall durch eine in den Kanälen 30 verlaufende optische Leitung 32. Als Vorteil kann hierfür angeführt werden, daß die optischen Leitungen 32 durch die nicht weit davon liegenden elektrischen Versorgungsleitungen L1, L2, L3 nicht gestört werden können bzw. auf besonderen Entstörschutz in diesem Bereich verzichtet werden kann.

Für den Anschluß des elektrischen Gerätes über die Anschlußleitung 6 wird i.d.R. der gebäudeseitig bereits angeschlossene Klemmstein 13 wieder etwas aus seiner Führung herausgenommen, so daß seine Klemmen zum Einführen der blanken Leitungsadern frei zugänglich sind. Dabei kommt es weniger darauf an, daß die Leitungsadern L1, L2, L3, N, 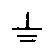 der Anschlußleitung 6 in einer exakt geführten Krümmung an die Klemmen des Klemmsteins 13 angeschlossen sind, sie können auch gestaucht oder geknickt werden; für die elektrische Stromleitung hat das keinen Einfluß. Anders sieht das bei Lichtleitern aus. Lichtleiter dürfen nicht geknickt und ein zulässiger Krümmungsradius darf nicht unterschritten werden, da sonst die Lichtleitung unterbrochen oder stark gedämpft ist. Deshalb ist beim Anschluß der Lichtleiter LW1 und LW2 an die Lichtfenster 26, 27 große Sorgfalt zu üben, insbesondere ist darauf zu achten, daß durch die Zugentlastungsvorrichtung 18 keine der beschriebenen Deformationen der Lichtleiter auftreten. Es ist deshalb zu empfehlen, die Lichtleiter LW1 und LW2 erst dann anzuschließen, wenn die Anschlußleitung 6 mit der Zugentlastungsvorrichtung 18 bereits festgeklemmt ist.

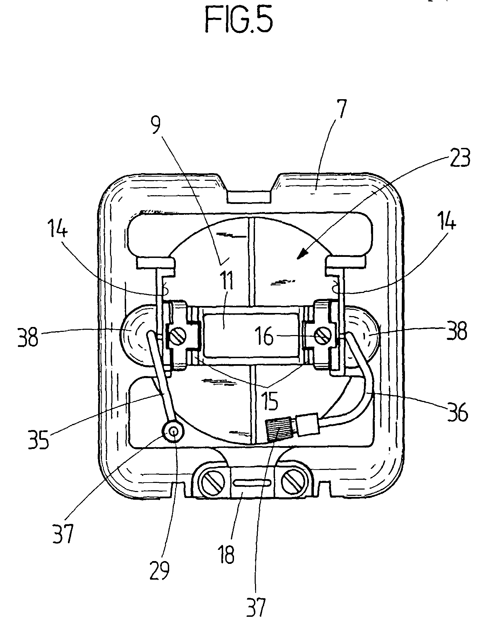

Die Figuren 3 bis 5 zeigen eine Ausführung, bei der die Erfordernisse beim Umgang mit Lichtleitern, insbesondere deren Anschluß, bereits konstruktiv berücksichtigt sind, so daß der Elektroinstallateur keine besonderen Kenntnisse der Lichtleitertechnologie anzuwenden braucht.

Aus Figur 4 der Zeichnung geht hervor, daß die mit den optoelektronischen Wandlern (Lichtsender S und Lichtempfänger E) des Busankopplers BA gekoppelten und bis in den Bereich der vorderseitigen Ebene des Tragrahmens 7 hochgezogenen optischen Leitungen 32 noch jeweils durch ein flexibles Stück 35, 36 verlängert sind und an den freien Enden je eine Lichtleiteranschlußklemme 37 aufweisen, die das Lichtfenster 27, 28 enthalten. Die optischen Leitungen 32 und deren Verlängerungen 35, 36 können aus einem Stück bestehen. Es kann sich dabei um handelsübliche Lichtleiter, bestehend aus einem Mantel von 2 mm ⌀ und einer Lichtleiterseele von ca. 1 mm ⌀, handeln. Die optischen Leitungsstücke 32 sind in die Kanäle 30 eingeführt und mit einem Kleber fixiert. Die Kopplung mit dem Lichtsender S und dem Lichtempfänger E kann noch durch einen lichtleitenden Kleber verbessert werden. Die flexiblen Verlängerungen 35, 36 haben eine Länge, die Biegungen in einem weiten Bogen zulassen, so daß die Verlängerungen 35, 36 mit zulässigen Krümmungen aus einer aus der Ebene des Tragrahmens 7 austretenden Lage in einer quer zur Ebene des Tragrahmens 7 verlaufenden Lage biegbar sind. Der Tragrahmen 7 besitzt im Austrittsbereich der optischen Leitungen 32 trichterartige Einbuchtungen 38. Hierdurch wird ein Knickschutz der austretenden Verlängerungen 35, 36 erreicht.

In Figur 3 ist zeichnerisch dargestellt wie nach dem Anschluß der Lichtleiter LW1 und LW2 an die Verlängerungen 35, 36 eine freiliegende Leitungsführung erreicht wird, die im Hohlraum unter dem Deckel 17 Platz findet. Bei den Lichtleiteranschlußklemmen 37 handelt es sich um Steckklemmen, mit denen die Lichtleiter am Umfang durch Andrehen einer Überwurfmutter festgeklemmt werden. Diese Steckverbindung kann von Hand ohne Zuhilfenahme eines Werkzeuges erfolgen. Es sollte lediglich darauf geachtet werden, daß beim Zusammenstecken der Lichtleiter deren Stirnflächen abstandslos aneinanderliegen.

## Patentansprüche

1. Elektrische Anschlußvorrichtung mit einem durch einen Deckel (17) abgedeckten Träger (7,10,11) für eine Klemmeinrichtung (13), an der einerseits die Netzleitungen (5) und andererseits eine bewegliche Anschlußleitung (6) eines elektrischen Gerätes fest anschließbar sind,
**dadurch gekennzeichnet,**
daß die bewegliche Anschlußleitung (6) außer elektrischen Leitungen noch wenigstens einen Lichtleiter (LW1,LW2) enthält,
daß die Anschlußvorrichtung wenigstens einen lichtelektrischen Wandler (S,E) aufweist, der mit dem Lichtleiter (LW1, LW2) der Anschlußleitung (6) optisch koppelbar ist, und
daß der wenigstens eine lichtelektrische Wandler (S,E) mit seinem elektrischen Eingang und/oder Ausgang mit einem elektrischen Busankoppler (BA) verbunden oder verbindbar ist, der an eine elektrische Busleitung (20) anschließbar ist.

2. Elektrische Anschlußvorrichtung nach Anspruch 1, dadurch gekennzeichnet, daß der Busankoppler (BA) an dem Träger (7,10,11) angebracht ist.

3. Elektrische Anschlußvorrichtung nach Anspruch 1 oder 2, dadurch gekennzeichnet, daß die Klemmeinrichtung (13) und der Busankoppler (BA) in getrennten Installationsräumen untergebracht sind.

4. Elektrische Anschlußvorrichtung nach einem der Ansprüche 1 bis 3, dadurch gekennzeichnet, daß sich der Busankoppler (BA) in einem an dem Träger (11) angeordneten Gehäuse (23) befindet, welches eine Kontaktvorrichtung (22) für den Anschluß der Busleitung (20) aufweist.

5. Elektrische Anschlußvorrichtung nach Anspruch 4, dadurch gekennzeichnet, daß der Busankoppler (BA) an der der Klemmeinrichtung (13) abgewandten Rückseite des Trägers (7) angeordnet ist und von der Vorderseite des Trägers (7) bis in das Gehäuse (23) Kanäle oder Aufnahmen für optische oder elektrische Leitungen (31,32) verlaufen.

6. Elektrische Anschlußvorrichtung nach einem der Ansprüche 1 bis 5, dadurch gekennzeichnet, daß der mindestens eine lichtelektrische Wandler (S,E) in einer an der der Klemmeinrichtung (13) zugewandten Vorderseite des Trägers vorgesehenen Aufnahme (34) angebracht und durch elektrische Leitungen (31) mit dem Busankoppler (BA) verbunden ist.

7. Elektrische Anschlußvorrichtung nach einem der Ansprüche 1 bis 5, dadurch gekennzeichnet, daß an der der Klemmeinrichtung (13) zugewandten Vorderseite des Trägers mindestens eine Aufnahme (34) mit einem Lichtfenster (26,27) vorgesehen ist und je ein Lichtleiter (31) mit einem Ende in dem Fenster (26,27) der Aufnahme (34) angebracht und mit dem anderen Ende mit dem lichtelektrischen Wandler (S,E) gekoppelt ist.

8. Elektrische Anschlußvorrichtung nach einem der Ansprüche 4 bis 7, dadurch gekennzeichnet, daß der wenigstens eine lichtelektrische Wandler (S,E) im Gehäuse (23) des Busankopplers (BA) angeordnet und mit einem bis in den Bereich der vorderseitigen Ebene des Trägers (7) hochgezogenen Lichtleiter (32) gekoppelt ist, der über die Ebene des Trägers (7) hinaus noch durch ein flexibles Stück (35,36) verlängert ist, das an seinem freien Ende eine Lichtleiteranschlußklemme (37) mit einem Lichtfenster (28,29) aufweist.

9. Elektrische Anschlußvorrichtung nach Anspruch 8, dadurch gekennzeichnet, daß das flexible Stück (35,36) des Lichtleiters (32) mit einer zulässigen Krümmung unter dem Deckel 17 verstaubar ist.

10. Elektrische Anschlußvorrichtung nach Anspruch 8 oder 9, dadurch gekennzeichnet, daß der Träger (7) um den Austrittsbereich der optischen Leitungen (32) herum je eine trichterartige Einbuchtung (38) aufweist.

11. Elektrische Anschlußvorrichtung nach einem der Ansprüche 1 bis 10, dadurch gekennzeichnet, daß der Busankoppler (BA) mit zwei lichtelektrischen Wandlern verbunden ist, von denen der eine als Lichtsender (S) und der andere als Lichtempfänger (E) ausgebildet ist.

12. Elektrische Anschlußvorrichtung nach einem der Ansprüche 1 bis 11, dadurch gekennzeichnet, daß eine Zugentlastung (18) für die Anschlußleitung (6) vorgesehen ist, und daß jeweils ein Lichtfenster (26,27) auf die der Zugentlastung (18) zugewandte Seite des Trägers (7) gerichtet ist.

13. Elektrische Anschlußvorrichtung nach Anspruch 12, dadurch gekennzeichnet, daß die Lichtfenster (26,27) etwa in der Ebene der Zugentlastung (18) angeordnet sind.

14. Elektrische Anschlußvorrichtung nach einem der Ansprüche 1 bis 13, dadurch gekennzeichnet, daß Lichtfenster (26,27;28,29) jeweils an einer den Lichtaustrittsquerschnitt freilassenden Klemmvorrichtung (37) für den Lichtleiter (LW1,LW2) angeordnet ist.

15. Elektrische Anschlußvorrichtung nach Anspruch 5, dadurch gekennzeichnet, daß in dem Träger (7) je ein Kanal (30) bzw. eine Aufnahme für einen Lichtleiter seitlich an der Klemmeinrichtung (13) vorbeiführt.

## Claims

1. Electrical connecting device comprising a support (7,10,11) covered by a cover (17), for a clamping means (13) to one end of which the power lines (5) and to the other end of which a flexible connecting line (6) of an electrical instrument can be permanently connected,
**characterized in that**
the flexible connecting line (6) comprises, besides electrical lines, at least one optical fibre (LW1,LW2),
the connecting device comprises at least one photoelectric transducer (S,E) adapted to be optically coupled to the optical fibre (LW1, LW2) of the connecting line (6), and
the electrical input and/or output of the at least one photoelectric transducer (S,E) is connected or adapted to be connected with an electrical bus coupler (BA) which can be connected to an electrical bus line (20).

2. Electrical connecting device according to claim 1, characterized in that the bus coupler (BA) is attached to the support (7,10,11).

3. Electrical connecting device according to claim 1 or 2, characterized in that the clamping means (13) and the bus coupler (BA) are accommodated in separate installation rooms.

4. Electrical connecting device according to one of claims 1 to 3, characterized in that the bus coupler (BA) is located in a housing (23) arranged on the support (11), the housing (23) comprising a contact device (22) for connecting the bus line (20).

5. Electrical connecting device according to claim 4, characterized in that the bus coupler (BA) is arranged on the support (7) rear side opposite the clamping means (13), and that ducts or receiving elements for optical or electrical lines (31,32) extend from the support (7) front side into the housing (23).

6. Electrical connecting device according to one of claims 1 to 5, characterized in that the at least one photoelectric transducer (S,E) is disposed in a receiving element (34) provided at the support front side facing the clamping means (13) and connected by electrical lines (31) with the bus coupler (BA).

7. Electrical connecting device according to one of claims 1 to 5, characterized in that at the support front side facing the clamping means (13) at least one receiving element (34) with an optical window (26, 27) is provided and one end of the optical fibre (31) is attached to the window (26,27) of the receiving element (34) and the other end is coupled to the photoelectric transducer (S,E).

8. Electrical connecting device according to one of claims 4 to 7, characterized in that the at least one photoelectric transducer (S,E) is arranged in the housing (23) of the bus coupler (BA) and is coupled to an optical fibre (32) pulled up into the portion of the front-side plane of the support (7), the optical fibre (32) being extended beyond the plane of the support (7) by a flexible element (35,36) which comprises at its free end an optical fibre connection terminal (37) with an optical window (28, 29).

9. Electrical connecting device according to claim 8, characterized in that the flexible element (35,36) of the optical fibre (32) can be stowed under the cover (17) when bent to a permissible extent.

10. Electrical connecting device according to claim 8 or 9, characterized in that the support (7) comprises a tulip-shaped recess (38) around each outlet portion of the optical fibres (32).

11. Electrical connecting device according to one of claims 1 to 10, characterized in that the bus coupler (BA) is connected with two photoelectric transducers one of which is configured as light transmitter (S) and the other as light receiver (E).

12. Electrical connecting device according to one of claims 1 to 11, characterized in that a strain relief means (18) is provided for the connecting line (6) and that one optical window (26,27) each is directed to the support (7) side facing the strain relief means (18).

13. Electrical connecting device according to claim 12, characterized in that the optical windows (26,27) are arranged approximately on the plane of the strain relief means (18).

14. Electrical connecting device according to one of claims 1 to 13, characterized in that optical windows (26,27;28,29) are arranged at a connection terminal (37) for the optical fibre (LW1,LW2), the connection terminal (37) leaving the light exit cross-section open.

15. Electrical connecting device according to claim 5, characterized in that in the support (7) a duct (30) or a receiving element for an optical fibre laterally passes the clamping means (13).

## Revendications

1. Dispositif de raccordement électrique comportant un support (7, 10, 11) recouvert par un couvercle (17), destiné à un dispositif de connexion (13), auquel peuvent être raccordées en fixe, d'une part les lignes (5) du secteur, et d'autre part une ligne de raccordement (6) amovible d'un appareil électrique,
caractérisé en ce que
outre des conducteurs électriques, la ligne de raccordement (6) amovible comporte au moins encore un guide d'ondes lumineuses (LW1, LW2),
le dispositif de raccordement comporte au moins un convertisseur photoélectrique (S, E), qui peut être couplé optiquement au guide d'ondes lumineuses (LW1, LW2) de la ligne de raccordement (6), et
ledit au moins un convertisseur photoélectrique (S, E) est relié ou peut être relié par son entrée et/ou sa sortie électrique à un coupleur électrique de bus (BA), qui peut être relié à une ligne électrique de bus (20).

2. Dispositif de raccordement électrique selon la revendication 1, caractérisé en ce que le coupleur de bus (BA) est fixé sur le support (7, 10, 11).

3. Dispositif de raccordement électrique selon la revendication 1 ou 2, caractérisé en ce que le dispositif de connexion (13) et le coupleur de bus (BA) sont logés dans des espaces d'installation séparés.

4. Dispositif de raccordement électrique selon l'une quelconque des revendications 1 à 3, caractérisé en ce que le coupleur de bus (BA) est situé dans un boîtier (23) disposé sur le support (11), le boîtier comportant un dispositif de contact (22) pour le raccordement de la ligne de bus (20).

5. Dispositif de raccordement électrique selon la revendication 4, caractérisé en ce que le coupleur de bus (BA) est disposé sur la face arrière du support (7) opposée au dispositif de connexion (13), et en ce que des canaux ou des réceptions destinés à des lignes optiques ou électriques (31, 32) s'étendent de la face avant du support (7) jusque dans le boîtier (23).

6. Dispositif de raccordement électrique selon l'une quelconque des revendications 1 à 5, caractérisé en ce que ledit au moins un convertisseur photoélectrique (S, E) est disposé dans une réception (34) prévue sur la face avant du support orientée vers le dispositif de connexion (13), et est relié au coupleur de bus (BA) par des lignes électriques (31).

7. Dispositif de raccordement électrique selon l'une quelconque des revendications 1 à 5, caractérisé en ce que, sur la face avant du support orientée vers le dispositif de connexion (13), il est prévu au moins une réception (34) avec une fenêtre optique (26, 27), et en ce qu'un guide d'ondes lumineuses (31) est fixé par une extrémité dans la fenêtre (26, 27) de la réception (34), et est couplé par son autre -extrémité au convertisseur photoélectrique (S, E).

8. Dispositif de raccordement électrique selon l'une quelconque des revendications 4 à 7, caractérisé en ce que le seul convertisseur photoélectrique (S, E) au moins est disposé dans le boîtier (23) du coupleur de bus (BA), et est couplé à un guide d'ondes lumineuses (32) qui est tiré vers le haut jusque dans la zone du plan avant du support (7), celui-ci étant encore prolongé au-dessus du plan du support (7) par un élément flexible (35, 36), dont l'extrémité libre comporte une borne de raccordement (37) de guide d'ondes lumineuses avec une fenêtre optique (28, 29).

9. Dispositif de raccordement électrique selon la revendication 8, caractérisé en ce que l'élément flexible (35, 36) du guide d'ondes lumineuses (32) peut être logé avec une courbure admissible sous le couvercle (17).

10. Dispositif de raccordement électrique selon la revendication 8 ou 9, caractérisé en ce que le support (7) comporte une tulipe (38) de type entonnoir autour de la zone de sortie des lignes optiques (32).

11. Dispositif de raccordement électrique selon l'une quelconque des revendications 1 à 10, caractérisé en ce que le coupleur de bus (BA) est relié à deux convertisseurs photoélectriques, dont l'un est réalisé en tant que photoémetteur (S) et l'autre en tant que photorécepteur (E).

12. Dispositif de raccordement électrique selon l'une quelconque des revendications 1 à 11, caractérisé en ce qu'une décharge de traction (18) est prévue pour la ligne de raccordement (6), et en ce qu'une fenêtre optique (26, 27) est dirigée sur la face du support (7) orientée vers la décharge de traction (18).

13. Dispositif de raccordement électrique selon la revendication 12, caractérisé en ce que les fenêtres optiques (26, 27) sont sensiblement disposées dans le plan de la décharge de traction (18).

14. Dispositif de raccordement électrique selon l'une quelconque des revendications 1 à 13, caractérisé en ce que chaque fenêtres optiques (26, 27 ; 28, 29), sont prévues surun dispositif de connexion (37) pour le guide d'ondes lumineuses (LW1, LW2) laissant libre la section transversale de sortie de lumière.

15. Dispositif de raccordement électrique selon la revendication 5, caractérisé en ce qu'un canal (30) ou une réception pour un guide d'ondes lumineuses passe dans le support (7) latéralement à côté du dispositif de connexion (13).
